# EUROPEAN PATENT APPLICATION

(11) **EP 2 728 526 A1**
(43) Date of publication of application: **07.05.2014**
(21) Application number: 13152530.5
(22) Date of filing: 24.01.2013
(51) Int. Cl.: G06Q 10/10, G06Q 50/02

(54) **A simulation device for liquidation of farmland**

(30) Priority: 30.10.2012 JP 2012238558
(71) Applicant: Hitachi Solutions, Ltd., Tokyo 140-0002 (JP)
(72) Inventor: Saegusa, Atsuhiro, Shinagawaku, Tokyo 1400002 (JP); Yamagata, Noriko, Shinagawaku, Tokyo 1400002 (JP); Nishiguchi, Osamu, Shinagawaku, Tokyo 1400002 (JP)
(74) Representative: Ström & Gulliksson AB

(57) **Abstract**

A device is provided that predicts in advance a farm that will be liquidated due to farm retirement or finds a renter of the farm. CPU 50 acquires determination timing. This determination timing may be acquired from one stored in advance or may be acquired externally. CPU 50 calculates age of each farmer at the acquired determination timing based on age information that is included in basic information. CPU 50 determines whether or not the age of the each farmer at the determination timing is a specified age or higher. CPU 50 predicts whether or not the each block will be a liquidated farm based on a determination result of the age determination means, information on presence or absence of a successor, and information on presence or absence of intention to expand about the farmer of the each block. CPU 50 outputs the block that is predicted as the liquidated farm and the block that is not predicted as the liquidated farm by the liquidated farm prediction in a distinguishable manner from each other.

## Description

### TECHNICAL FIELD

The present invention relates to a simulation device for liquidation of farmland that simulates a farm that is potentially abandoned.

### BACKGROUND ART

A system has been suggested that manages information on crop conversion, acreage reduction, and the like, with a computer and that assists in well-planned and rational performance. A system has been disclosed in JP 2002-269299 A in which attribute information of each farm is stored and the attribute information can easily be checked by clicking on a map.

### SUMMARY OF THE INVENTION

### Problem to be Solved by the Invention

Although the above-mentioned prior art can assist in preparing a plan for crop conversion or acreage reduction, the prior art cannot be used to develop a measure against farm retirement where the farmers have kept retiring from business that has been an issue in recent years.

Therefore, the present invention has a purpose to provide a system that can predict a farm that will be liquidated due to the farm retirement or find a renter of the farm.

### Means for Solving the Problem

(1)(10) A simulation device for liquidation of farmland according to the present invention includes: a storing section for storing basic information about each farmer that includes age information, information on presence or absence of a successor, information on presence or absence of intention to expand, and information on a farmed block; means for acquiring determination timing; means for calculating age of the each farmer at the determination timing based on the age information and determining whether or not the age is same as a specified age or higher; means for predicting and storing whether or not the block owned by the each farmer will be a liquidated farm based on a determination result of the age determination means, the information on presence or absence of a successor, and the information on presence or absence of intention to expand about the each farmer; and means for outputting the block that is predicted as the liquidated farm and the block that is not predicted as the liquidated farm by the liquidated farm prediction means in a distinguishable manner from each other.

Therefore, it is possible to appropriately predict the liquidated farm at the determination timing in the future.
(2)(11) The simulation device for liquidation of farmland according to the present invention is characterized that the basic information includes farm map data that is divided by the each block, and the liquidated farm output means outputs a farm map on which the block that is predicted as the liquidated farm and the block that is not predicted as the liquidated farm by the liquidated farm prediction means are distinguishable from each other.

Therefore, it is possible to confirm the liquidated farm at the determination timing in the future on the farm map.
(3)(12) The simulation device for liquidation of farmland according to the present invention is characterized that, in a case where the age of the farmer is at the specified age or higher at the determination timing, the information on presence or absence of a successor indicates the absence of a successor, and the information on presence or absence of intention to expand indicates the absence of intention to expand, the liquidated farm prediction means determines that the each block owned by the farmer will be the liquidated farm.

Therefore, it is possible to predict the liquidated farm based on the intention to expand and the presence or absence of a successor.
(4)(13) The simulation device for liquidation of farmland according to the present invention further includes means for extracting the farmer with a potential to farm the block that is predicted as the liquidated farm based on the determination result of the age determination means, the information on presence or absence of a successor, and the information on presence or absence of intention to expand about the farmer.

Therefore, it is possible to extract the farmer candidate with a potential to farm the predicted liquidated farm instead.
(5)(14) The simulation device for liquidation of farmland according to the present invention further includes means for extracting recommended candidate from the candidates for the subject liquidated farm based on a distance between the liquidated farm and the each block owned by a renter candidate.

Therefore, it is possible to extract the recommended farmer candidate based on the distance between the predicted liquidated farm and the block farmed by the recommended farmer candidate.
(6)(15) The simulation device for liquidation of farmland according to the present invention further includes means for extracting recommended candidate from the candidates for the subject liquidated farm based on whether or not the liquidated farm and the each block owned by the candidate belong to a same geographical community.

Therefore, it is possible to extract the recommended farmer candidate based on whether or not the farmer of the predicted liquidated farm and the farmer candidate belong to the same geographical community.
(7)(16) The simulation device for liquidation of farmland according to the present invention is characterized that a degree of importance of any of the determination result of the age determination means, the information on presence or absence of a successor, and the information on presence or absence of intention to expand that are used for the prediction by the liquidated farm prediction means is changed based on whether or not the block that is predicted as the liquidated farm by the liquidated farm prediction means turns out to be the liquidated farm at the determination timing.

Therefore, it is possible to increase accuracy in the prediction of the liquidated farm.
(8)(17) The simulation device for liquidation of farmland according to the present invention is characterized that the degree of importance of any of the determination result of the age determination means, the information on presence or absence of a successor, and the information on presence or absence of intention to expand that are used for the extraction by the candidate extraction means is changed based on who is the farmer of the liquidated farm in the determination year and beyond.

Therefore, it is possible to increase accuracy in the extraction of the candidate.
(9)(18) The simulation device for liquidation of farmland according to the present invention is characterized that the simulation device for liquidation of farmland is configured as a server and that a user accesses the server from a terminal that is connected thereto via the Internet.

Therefore, the user can simulate the liquidation of farmland from the terminal.
"Determination timing acquisition means" corresponds to a step S12 in embodiments.
"Age determination means" corresponds to steps S13 and S14 in the embodiments.
"Liquidated farm prediction means" corresponds to steps S15 to S17 in the embodiments.
"Liquidated farm output means" corresponds to a step S18 in the embodiments.

The "geographical community" indicates a geographical unit in which residents thereof are geographically adjacent and thus have a sense of community. In the embodiments, an area and a community correspond to this.

A "program" is a concept that includes a program in source format, a compressed program, and an encrypted program in addition to a program that can directly be executed by a CPU.

### BRIEF DESCRIPTION OF THE DRAWINGS

FIG. 1 is a function block diagram of a simulation device for liquidation of farmland according to one embodiment of the present invention;
FIG. 2 shows a system configuration when the simulation device for liquidation of farmland is constructed as a server S;
FIG. 3 shows hardware configuration of the server S;
FIG. 4 shows hardware configuration of a terminal T1;
FIG. 5a is a flowchart of processing to predict a liquidated farm;
FIG. 5b is a flowchart of processing to predict the liquidated farm;
FIG. 6 is an example of a farmer database (DB);
FIG. 7 is an example of a farm DB;
FIG. 8 is a map that shows prediction of the liquidated farms;
FIG. 9 is a list of farmers that is displayed upon the prediction of the liquidated farms;
FIG. 10a is a flowchart of processing to extract a farmer candidate;
FIG. 10b is a flowchart of processing to extract the farmer candidate;
FIG. 11 is a view that explains the extraction of the farmer candidates;
FIG. 12 is a display example of a list of the farmer candidates;
FIG. 13 is a view that shows the liquidated farm and fields of the farmer candidate; and
FIG. 14A is a weight table that is used when two or more factors are considered for the extraction of the farmer candidate.
FIG. 14B is a weight table that is used when two or more factors are considered for the extraction of the farmer candidate.

### DESCRIPTION OF THE PREFERRED EMBODIMENTS

### 1. Functional block diagram

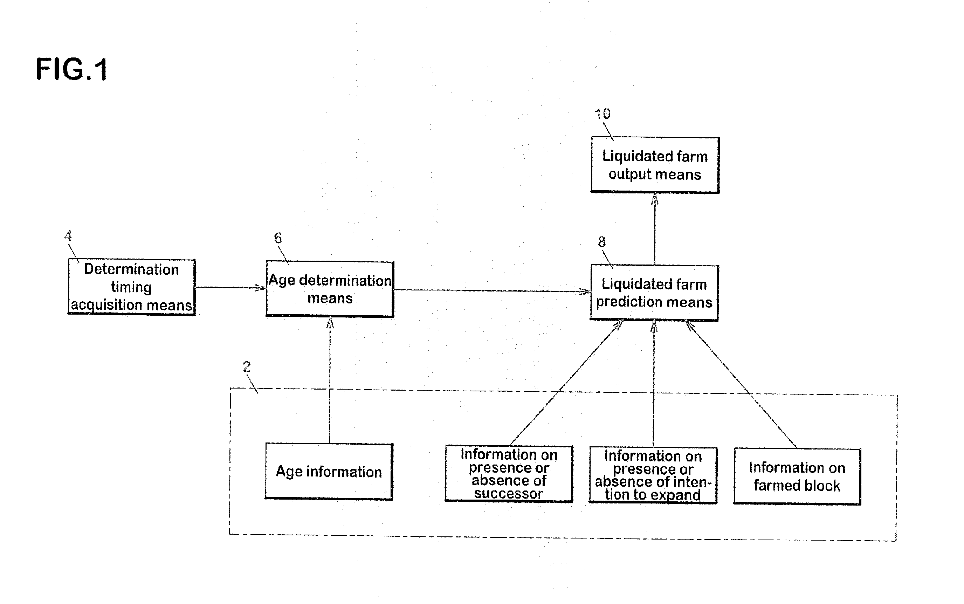

FIG. 1 is a functional block diagram of a simulation device for liquidation of farmland according to one embodiment of the present invention. A storing section 2 stores basic information about a farmer that includes age information, information on presence or absence of a successor, information on presence or absence of intention to expand, information on a block farmed by the farmer. Determination timing acquisition means 4 acquires timing to make a determination. This determination timing may be acquired from one stored in advance or may be acquired externally.

Age determination means 6 calculates age of the each farmer at the acquired determination timing based on the age information included in the basic information. The age determination means 6 also determines whether or not the age of the each farmer at the determination timing is same as a predetermined age or higher.

Liquidated farm prediction means 8 predicts whether or not each block will be a liquidated farm based on a determination result of the age determination means, the information on presence or absence of a successor, and the information on presence or absence of intention to expand about the farmer of the each block. Liquidated farm output means 10 outputs the block that is predicted as the liquidated farm and the block that is not predicted as the liquidated farm by the liquidated farm prediction means in a distinguishable manner from each other.

### 2. Hardware configuration

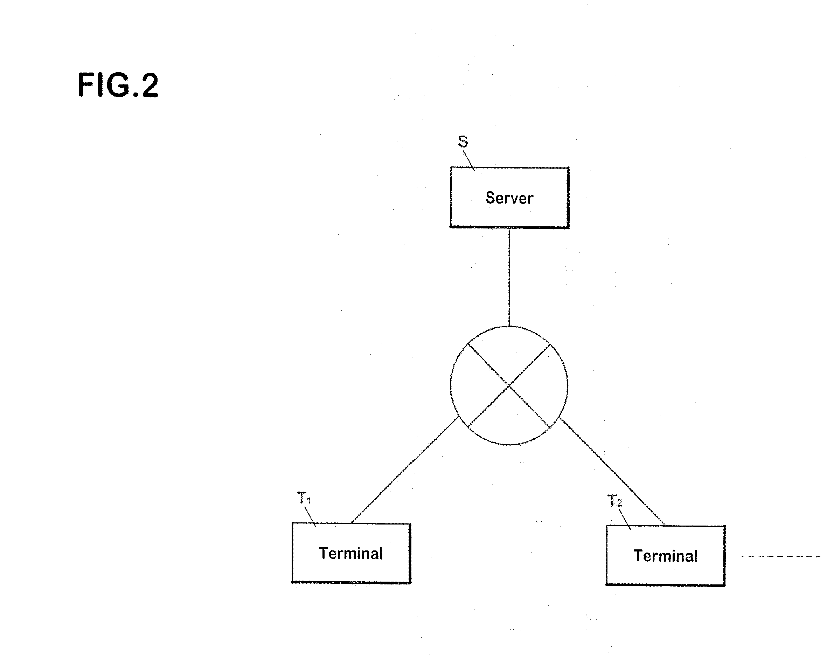

FIG. 2 is a general view of the simulation device for liquidation of farmland that is configured as a server. A server S is connected to the Internet. Terminals T1, T2...can access the server S via the Internet.

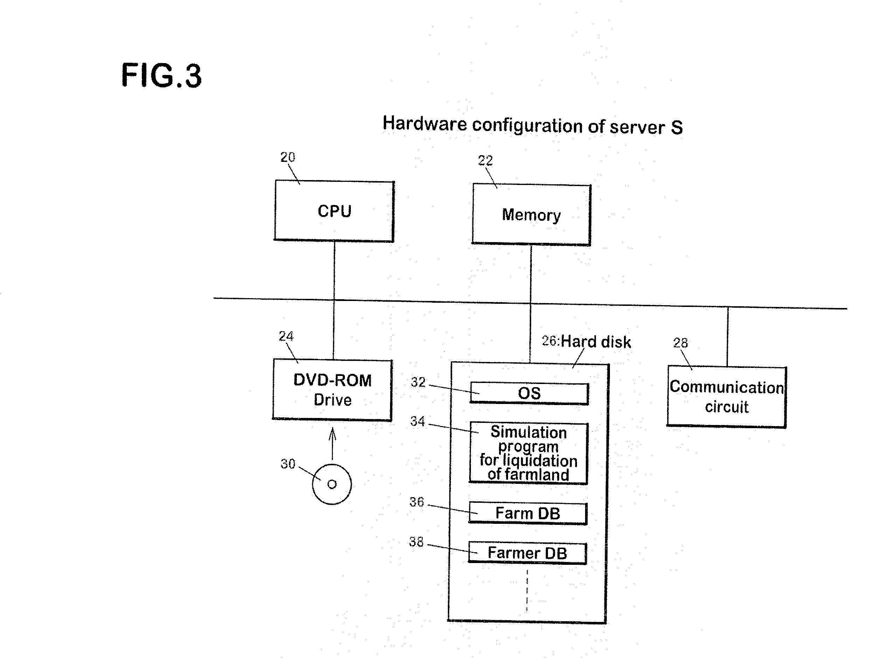

FIG. 3 shows hardware configuration of the server S. A CPU 20 is connected to a memory 22, a DVD-ROM drive 24, a hard disk 26, and a communication circuit 28. The hard disk 26 stores an operating system (OS) 32, a simulation program 34 for liquidation of farmland, a farm DB 36, and a farmer DB 38. The communication circuit 28 is used to connect to the Internet.

The simulation program 34 for liquidation of farmland fulfills function thereof by cooperation with the OS 32. These programs are originally stored in a DVD-ROM 30 and installed in the hard disk 26 via the DVD-ROM drive 24.

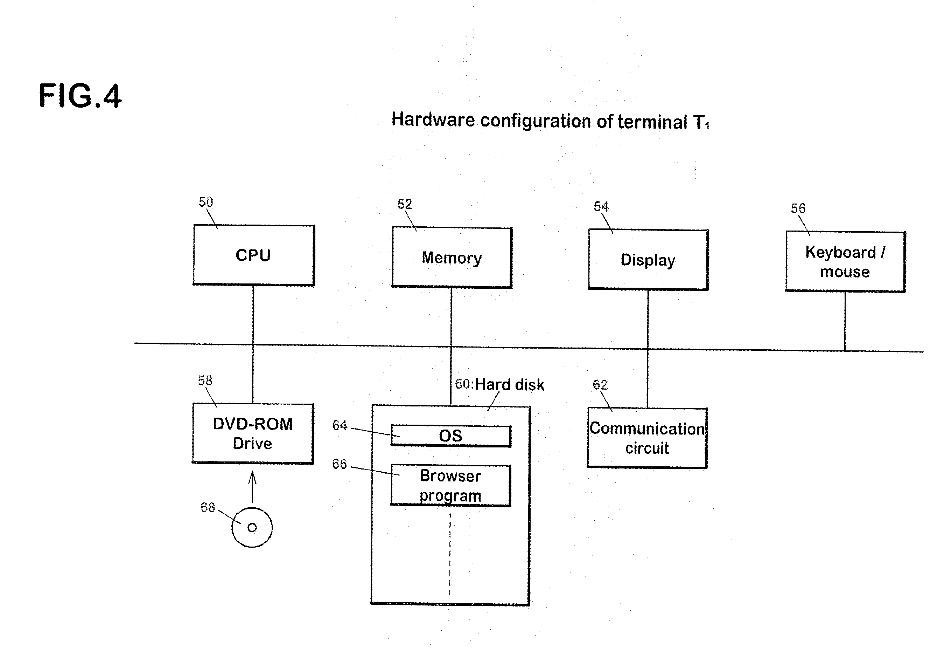

FIG. 4 shows hardware configuration of the terminal T1. A CPU 50 is connected to a memory 52, a display 54, a keyboard/mouse 56, a DVD-ROM drive 58, a hard disk 60, and a communication circuit 62. The hard disk 60 stores an operating system (OS) 64 and a browser program 66. The communication circuit 62 is used to connect to the Internet.

The browser program 66 fulfills function thereof by cooperation with the OS 64. These programs are originally stored in a DVD-ROM 68 and installed in the hard disk 60 via the DVD-ROM drive 58. The other terminals T2...have the same hardware configuration.

### 3. Processing to simulate liquidation of farmland

### (1) Processing to predict a liquidated farm

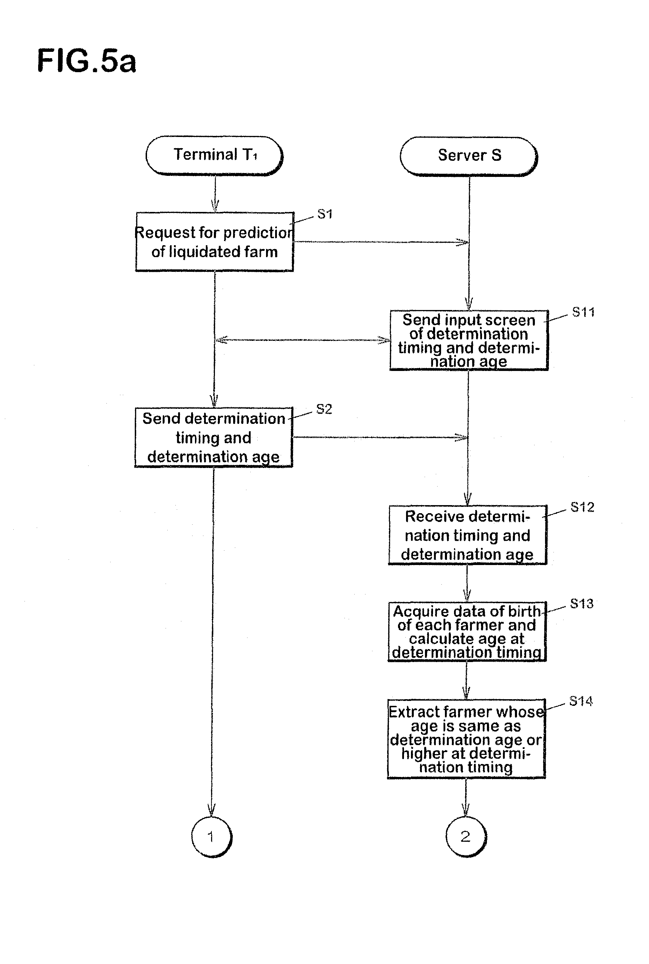

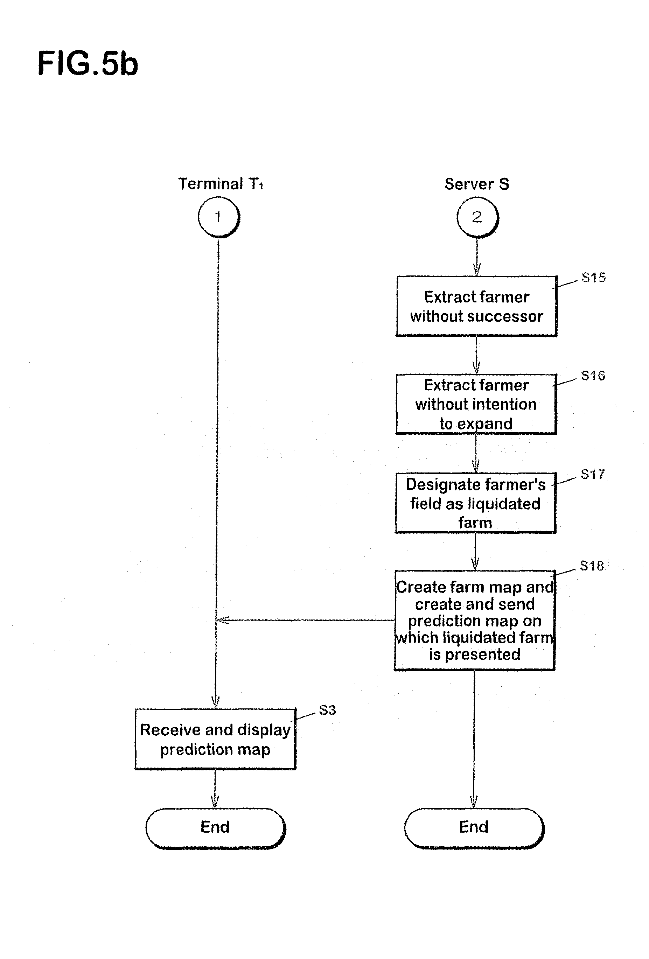

FIG. 5a and FIG. 5b are flowcharts of the browser program 66 of the terminal T1 and the simulation program for liquidation of farmland 34 of the server S in the processing to predict the liquidated farm.

The browser program 66 of the terminal T1 (hereinafter may be referred to as the terminal T1) accesses the server S, designates a subject area by coordinates or the like, and requests the prediction of the liquidated farm (step S1). When receiving a request, the simulation program 34 for liquidation of farmland of the server S (hereinafter may be referred to as the server S) sends a screen for input of the determination timing that is necessary to predict the liquidated farm (step S11).

The terminal T1 presents this input screen on the display 54. A user refers to this screen and inputs the determination timing and the determination age by using the keyboard/mouse 56. For example, if a current year is 2012 and the liquidated farm in 5 years from the current year is to be predicted, the determination timing is input as "April 1, 2017" or the like. The user also inputs the determination age that is used as the basis of the determination. A description is continued with the determination age being set as 65 years old. The terminal T1 sends the input determination timing to the server S (step S2).

The server S receives the determination timing and the determination age (step S12) and stores them in the memory 22. Next, the server S acquires a date of birth from the basic information about the each farmer.

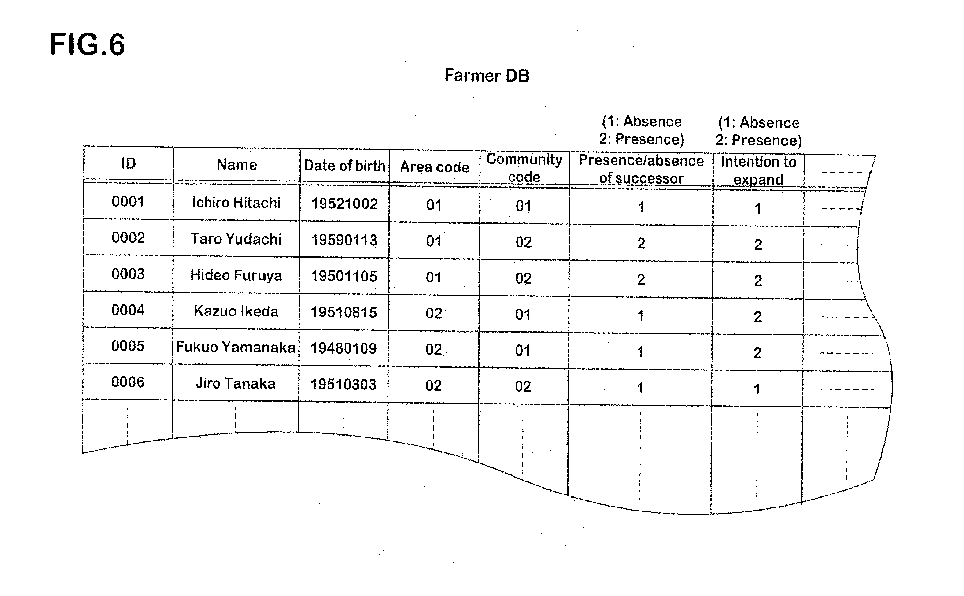

FIG. 6 shows an example of the farmer DB that is stored in the hard disk 26. A farmer ID for identification of the each farmer is stored in an ID column. A name of the each farmer is stored in a name column. A date of birth of the each farmer is stored in a date-of-birth column. In this embodiment, the date of birth is represented by year in a four-digit format, month in a two-digit format, and day in a two-digit format.

A code that indicates a residential area of the farmer is stored in an area code column. A code that indicates a residential community of the farmer is stored in a community code column. In this embodiment, a community is a small unit of group constituted from a few houses. An area is a group constituted from a few communities.

A column for presence or absence of a successor indicates whether or not the farmer has a successor. "1" indicates the absence of a successor, and "2" indicates the presence of a successor. A column for intention to expand indicates whether or not the farmer has an intention to expand scale of farming. "1" indicates the absence of the intention, and "2" indicates the presence of the intention.

The server S acquires the date of birth of the each farmer from the farmer DB. In addition, the server S calculates the age of the each farmer at the determination timing based on the acquired date of birth of the each farmer (step S13). If the determination timing is set 5 years from the current year, the server S calculates the age of the each farmer in 5 years instead of the current age.

As described above, after calculating the age of the each farmer at the determination timing, the server S extracts the farmer whose age at the determination timing is 65 years old (the determination age) or older (step S14). In the example of FIG. 6, if the determination timing is set in April 1, 2017, the farmer IDs "0003", "0004", "0005", and "0006" are extracted.

Next, the server S extracts a farmer without a successor from the extracted farmers (step S15). In the example of FIG. 6, the farmer IDs "0004", "0005", and "0006" are extracted. The server S further extracts a farmer without intention to expand from the extracted farmers (step S16). In the example of FIG. 6, the farmer ID "0006" is extracted.

Next, the server S refers to the farm DB 36 in the hard disk 26 and acquires a farm that is farmed by the extracted farmer.

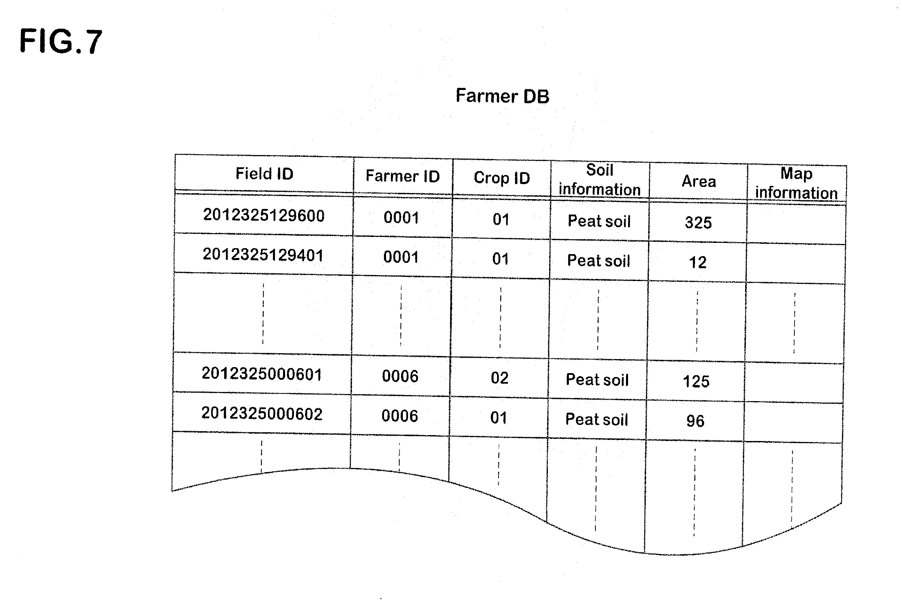

FIG. 7 shows an example of the farm DB 36. A field ID is an ID to identify each field. In this embodiment, the block that is divided by a path between the farms or by a cropping border is designated as a field. Also, in this embodiment, in order to uniquely identify the each field by the field ID, the field ID is constituted from a combination of a year, a town/village code, the farmer ID, and a serial number and a branch number per the farmer ID.

A crop ID is an ID to indicate a kind of crops grown in the field. For example, the crop ID is assigned such as "01" for soybean, "02" for rice, and so on. Soil information is information on soil of the field. An area indicates an area of the field. Map information includes information on a shape and a location of the field.

As described above, because the farmer ID "0006" is extracted, the field of this farmer is identified from the farm DB and designated as the predicted liquidated farm (step S17). Next, the server S reads out the map information of the field ID within a designated range from the farm DB and creates a farm map. At this time, the liquidated farm, which is predicted in the step S17, is presented in a different color (step S18). The server S sends the thus created farm map to the terminal T1. At this time, the server S also sends the information on the farmer of the each field and the like.

The terminal T1 receives and presents the farm map on the display 54 (step S3). Or, the farm map is printed by a printer (not shown).

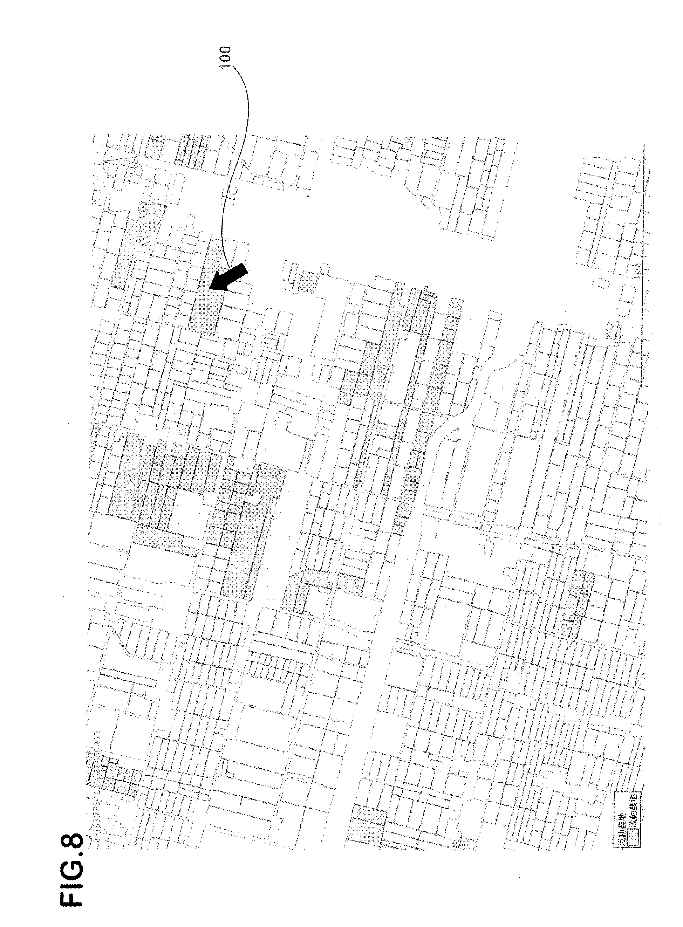

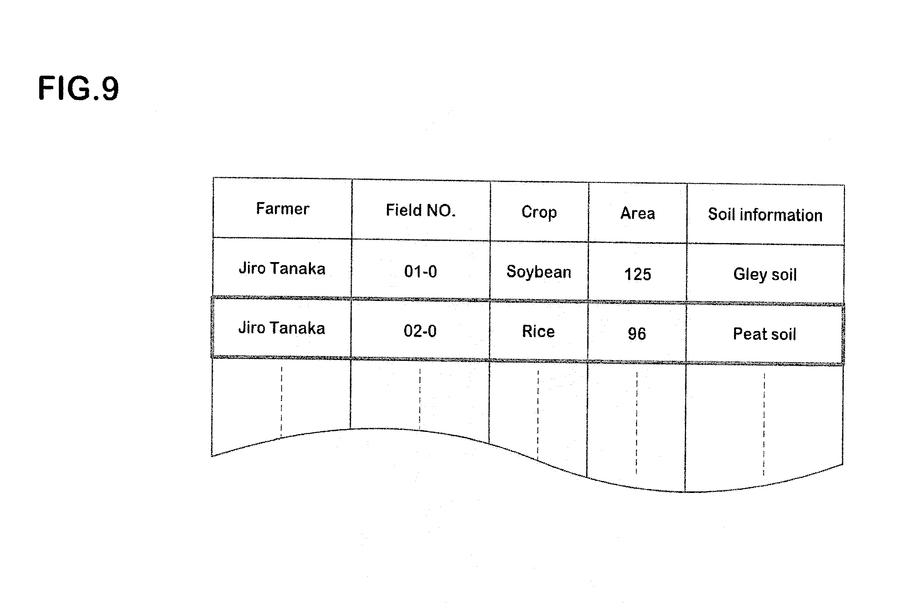

FIG. 8 shows an example of the farm map that is displayed as described above. In this drawing, a shaded field is the predicted liquidated farm. When the user of the terminal 1 operates the keyboard/mouse 56 and moves a mouse cursor 100 to the predicted liquidated farm on the farm map, the information of the corresponding field is displayed in a thick frame as shown in FIG. 9.

It can be said from the examples shown in FIG. 8 and FIG. 9 that, as for the predicted liquidated farm to which the cursor 100 is pointed, the farmer is Jiro Tanaka, the kind of crops is rice, the area is 96 square meters, and the soil is peat soil. The detailed information on a field other than the liquidated farm can also be displayed by pointing the cursor 100 thereto.

As described above, the user of the terminal T1 can find out the predicted liquidated farm at the determination timing and the details thereof.

### (2) Processing to extract a farmer candidate

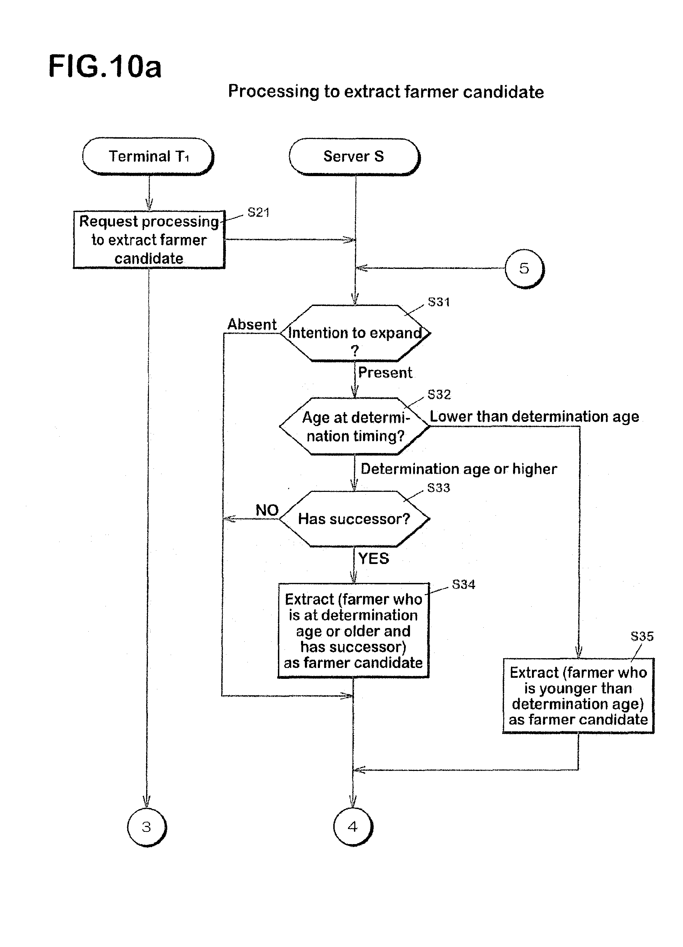

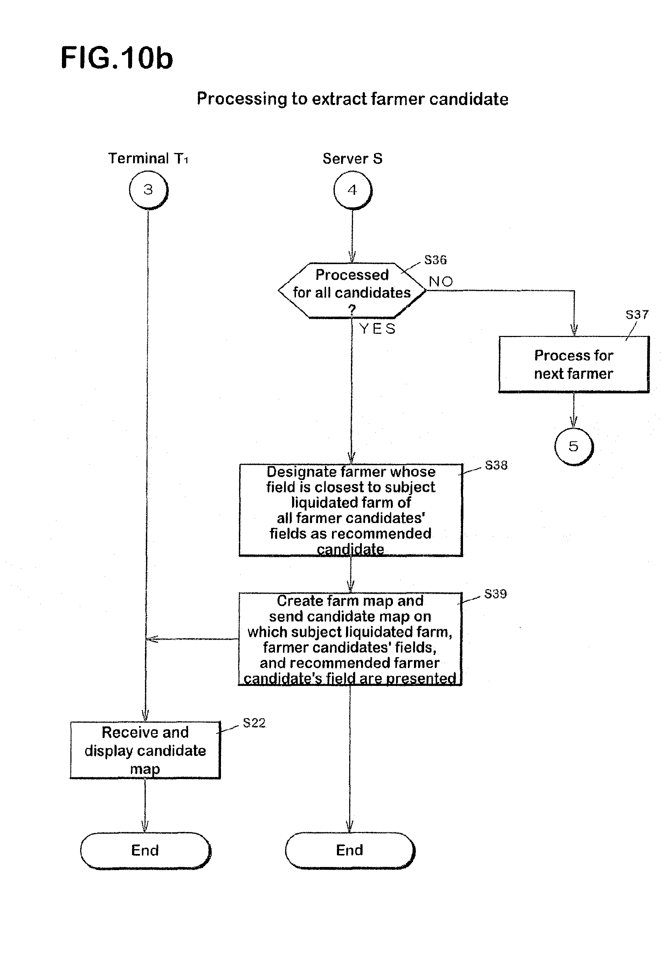

Next, a description will be made on processing to extract a candidate (a farmer candidate) who has a potential to farm the predicted liquidated farm instead of the current farmer by renting the liquidated farm, for example. FIG. 10a and FIG. 10b are flowcharts of the browser program 66 of the terminal T1 and the simulation program for liquidation of farmland 34 of the server S for the processing to extract the farmer candidate.

The user operates the terminal T1 to access the server S and requests the processing to extract the farmer candidate (step S21). At this time, the user specifies the predicted liquidated farm for which the farmer candidate is extracted. Thus, the processing to extract the farmer candidate is usually executed after execution of the processing to predict the liquidated farm.

When receiving a request, the server S refers to the farmer DB 38 stored in the hard disk 26 and executes the following processing for the each farmer. First, it is determined whether or not the first farmer has the intention to expand (step S31). If the farmer has no intention to expand and thus is unsuitable for the farmer candidate, the process proceeds to the step S36, and the step S31 and beyond are repeated for the next farmer.

If the farmer has the intention to expand, it is determined whether or not the farmer is 65 years old (the determination age) or older at the determination timing (step S32). If the farmer is younger than 65 years old (the determination age), the farmer is extracted as the farmer candidate (step S35). If the farmer is 65 years old (the determination age) or older, it is determined whether or not the farmer has a successor (step S33). If the farmer does not have a successor and thus is unsuitable for the farmer candidate, the process proceeds to the step S36, and the step S31 and beyond are repeated for the next farmer. If the farmer has a successor, the farmer is extracted as the farmer candidate (step S34).

Next, the server S determines whether or not the processing is executed for all the farmers (step S36). If the processing is not executed for all the farmers, the step S31 and beyond are repeated for the next farmer (step S37). Once the processing is completed for all the farmers, a list of the farmer candidates is created.

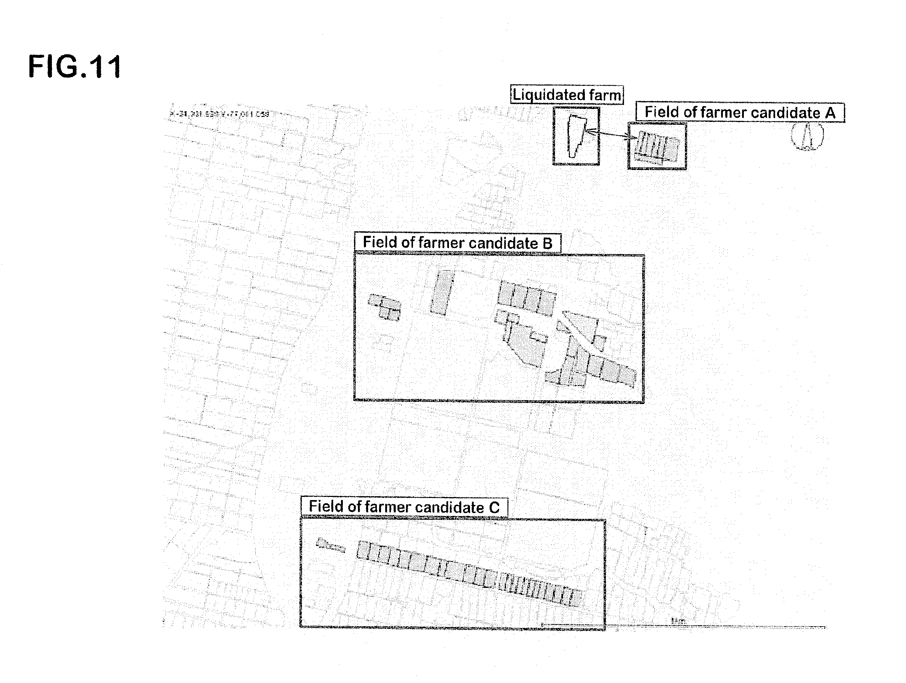

The server S then refers to the farm DB 36 and extracts the fields that are farmed by the extracted farmer candidates. Then, among all the farmer candidates, the farmer candidate whose field is closest to the subject liquidated farm is extracted as a recommended candidate (step S38). For example, as shown in FIG. 11, if the farmer candidate's field that is closest to the subject liquidated farm is farmed by a farmer A (it is determined by a distance between points of the two fields, each of which is closest to the other field, for example), the farmer candidate A is extracted as a recommended candidate A.

Next, the server S creates a farm map by presenting the subject liquidated farm, the farmer candidates' fields, and the recommended farmer candidate's field in different colors. Then, this map is sent to the terminal T1 (step S39). At this time, the server S also sends the information of the each field.

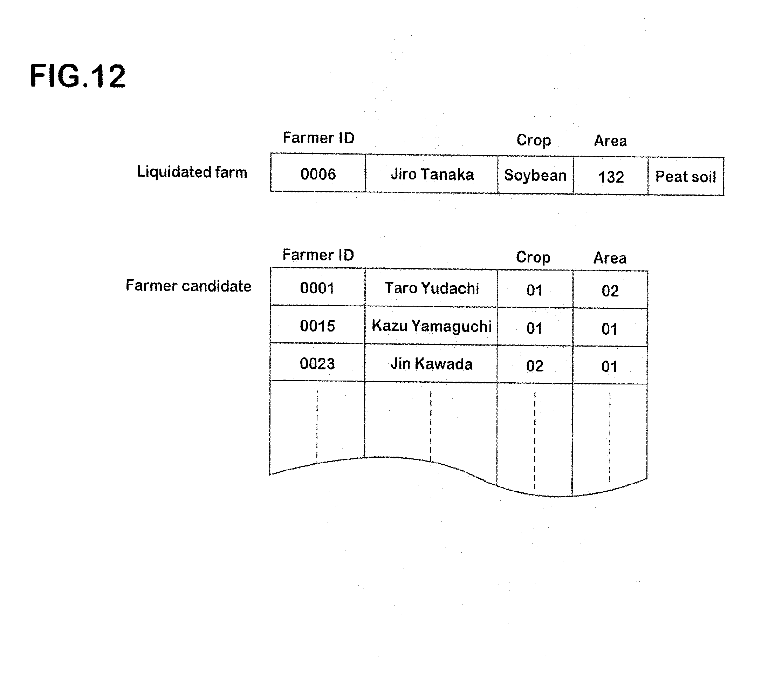

The terminal T1 receives and presents this farm map on the display 54 (step S22). Or, the farm map is printed by the printer (not shown). Alternatively, the user of the terminal T1 can select to display the lists of the farmer candidates and the recommended farmer candidates. FIG. 12 shows a display example of the list of the farmer candidates.

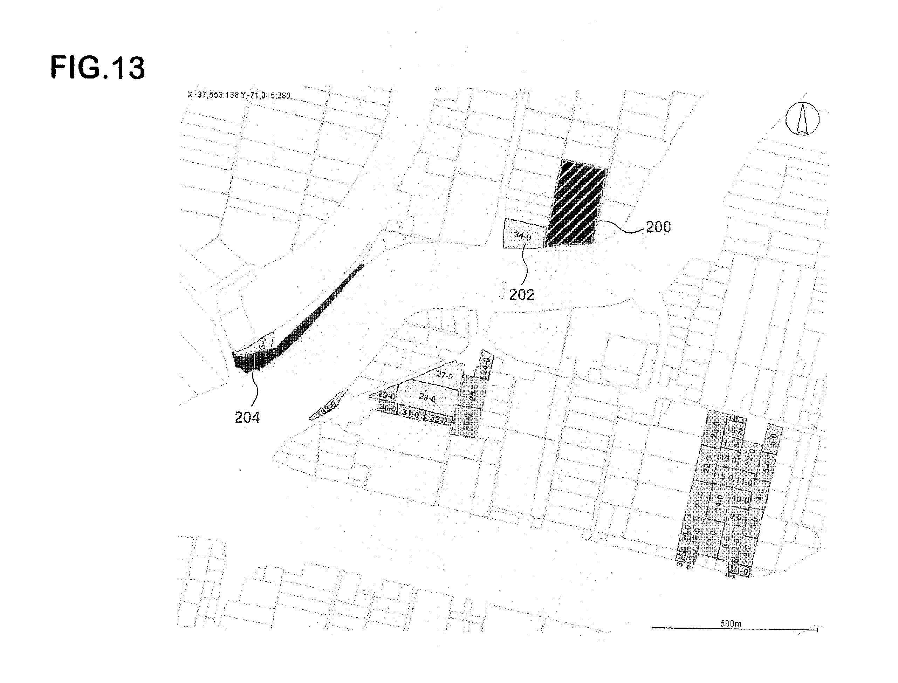

The user of the terminal T1 operates the keyboard/mouse 56 to select any of the farmer candidates and thus can see the details of the selected farmer candidate's field. For example, if the user selects Taro Yudachi, who is the farmer candidate on the first row, the terminal T1 shows the farm map such as one shown in FIG. 13 on the display 54.

In FIG. 13, in addition to a liquidated farm 200, the fields of the selected farmer candidate are displayed in different colors per kind of crops. The user sees this map and can recognize that a kind of crops grown in a field 202, which is closest to the liquidated farm 200, is different from that grown in the liquidated farm 200. It can also be said that a field 204 on which the same kind of crops as that of the liquidated farm 200 is grown is located a little distance away.

As it has been described so far, the user can determine a possibility of the each farmer candidate to farm the liquidated farm.

### 4. Other embodiments

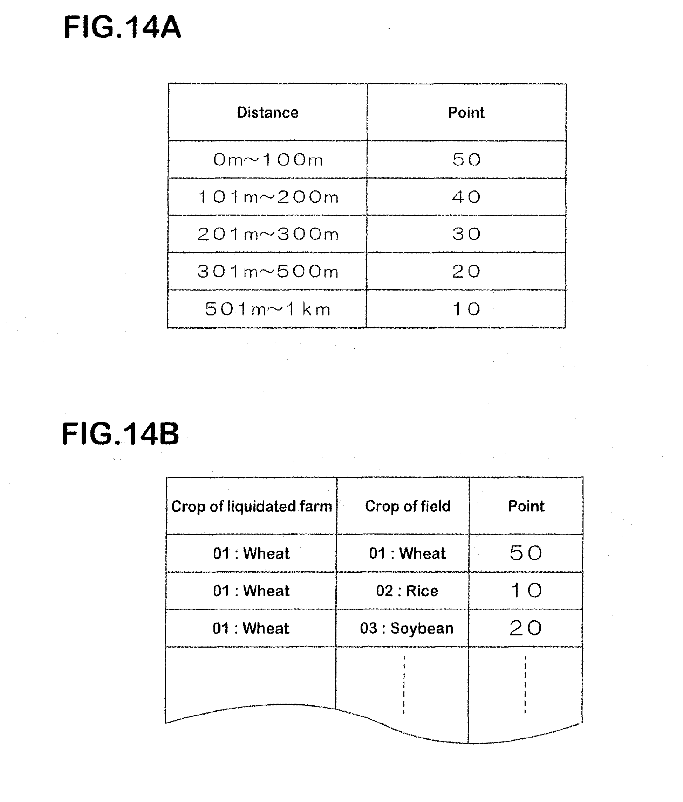

(1) In the above embodiment, the created farm map and the related data are sent to the terminal T1 and are locally processed by the browser program 66 of the terminal T1 for display. However, the information may be acquired by accessing the server S and displayed every time the user selects a specified farmer or a specified field.
(2) In the above embodiment, the farmer candidate who farms the field that is closest to the liquidated farm by distance is extracted as the recommended farmer candidate. However, the closest field may be determined not by a distance in a straight line between the two fields but by a travel distance on a road or the like.
   Instead of or in addition to the above distance, the farmer candidate who lives in the same area (or community) as the farmer who farms the liquidated farm may be extracted as the recommended farmer candidate. It is because the field may be rented more smoothly in a case where both of the farmers live in the same area than in a case where the two fields are located in the same area.
(3) The farmer candidate with the field on which the same kind of crops as or the similar kind of crops to the liquidated farm is grown may be extracted as the recommended farmer candidate.
(4) A suitable kind of crops for the soil information of the liquidated farm may be stored in advance in a table or like, and the farmer candidate who grows the same or similar kind of crops may be extracted as the recommended farmer candidate.
(5) A financial condition (farming profit or the like) of the each farmer may be stored in advance in a table or the like, and the farmer candidate in the good financial condition (whose profit is higher than a specified value) may be extracted as the recommended farmer candidate.
(6) Two or more of the above methods to extract the recommended farmer candidate (the distance as a primary extracting factor and the same kind of crops as a secondary extracting factor, for example) may be combined for the extraction. At this time, each of the extracting factors that are used in combination may be weighed for the extraction.
   For example, as for the distance between the liquidated farm and the field, a point is decided on the basis of a table such as one shown in FIG. 14A. In addition, a point that is based on a combination of the kind of crops of the liquidated farm and the kind of crops of the field is decided on the basis of a table such as one shown in FIG. 14B. Then, a point of the distance weighs 2 while a point of the crop weighs 1, and both of the points are added. For example, if the distance between the liquidated farm and the subject field is 50 m, and the kinds of crops grown in the liquidated farm and the subject field are wheat and soybean, respectively, 50 points x 2 + 20 points = 120 points are given to the field. This calculation is performed for all the fields, and the farmer who owns the field with a specified point or higher can be extracted as the farmer candidate.
   Furthermore, when the farmer (succeeding farmer) who actually farms the liquidated farm instead of the original farmer is identified, this is stored in the server S, and the above weight may be modified according to this. If the actual succeeding farmer is identified, the above weight is modified by increasing the point of the succeeding farmer's field. Accordingly, it is possible to increase accuracy in selection of the farmer candidate from the next time.
(7) The weighting and the modification thereof, which are described above, can be applied to the prediction of the liquidated farm. At this time, the liquidated farms are grouped according to whether the prediction turns out to be correct or incorrect, and factors shared by the correctly predicted farms (the age, the information on absence or presence of a successor, the information on absence or presence of intention to expand, and so on) are weighed higher.
(8) In the above embodiment, the user inputs the determination age each time. However, the user may set the determination age in advance, and the set determination age may be used unless it is modified.
(9) In the above embodiment, the server S serves as the simulation device for liquidation of farmland and is accessed by the terminals T1, T2... However, the simulation device for liquidation of farmland may be realized by a single (stand-alone) computer. In this case, the stand-alone computer executes the steps S1, S2, and S3 of FIG. 5a and FIG. 5b as well as the steps S21 and S22 of FIG. 10a and FIG. 10b.

## Claims

1. A simulation device for liquidation of farmland comprising:
a storing section that stores basic information about each farmer including age information, information on presence or absence of a successor, information on presence or absence of intention to expand, and information on a farmed block;
means for acquiring determination timing;
means for calculating age of the each farmer at the determination timing based on the age information and determining whether or not the age is same as a specified age or higher;
means for predicting and storing whether or not the block owned by the each farmer will be a liquidated farm based on a determination result of the age determination means, the information on presence or absence of a successor, and the information on presence or absence of intention to expand about the each farmer; and
means for outputting the block that is predicted as the liquidated farm and the block that is not predicted as the liquidated farm by the liquidated farm prediction means in a distinguishable manner from each other.

2. The simulation device for liquidation of farmland according to claim 1, wherein the basic information includes farm map data that is divided by the each block, and the liquidated farm output means outputs a farm map on which the block that is predicted as the liquidated farm and the block that is not predicted as the liquidated farm by the liquidated farm prediction means are distinguishable from each other.

3. The simulation device for liquidation of farmland according to claim 1 or 2, wherein,
in a case where the age of the farmer is same as the specified age or higher at the determination timing, where the information on presence or absence of a successor indicates the absence of a successor, and where the information on presence or absence of intention to expand indicates the absence of intention to expand, the liquidated farm prediction means determines that the each block owned by the farmer will be the liquidated farm.

4. The simulation device for liquidation of farmland according to any one of claims 1 to 3, further comprising:
means for extracting the farmer with a potential to farm the block that is predicted as the liquidated farm based on the determination result of the age determination means, the information on presence or absence of a successor, and the information on presence or absence of intention to expand about the farmer.

5. The simulation device for liquidation of farmland according to claim 4 further comprising:
means for extracting recommended candidate from the candidates for the subject liquidated farm based on a distance between the liquidated farm and the each block owned by a renter candidate.

6. The simulation device for liquidation of farmland according to claim 4 further comprising:
means for extracting recommended candidate from the candidates for the subject liquidated farm based on whether or not the liquidated farm and the each block owned by the candidate belong to a same geographical community.

7. The simulation device for liquidation of farmland according to any one of claims 1 to 6, wherein
a degree of importance of any of the determination result of the age determination means, the information on presence or absence of a successor, and the information on presence or absence of intention to expand that are used for the prediction by the liquidated farm prediction means is changed based on whether or not the block that is predicted as the liquidated farm by the liquidated farm prediction means turns out to be the liquidated farm at the determination timing.

8. The simulation device for liquidation of farmland according to any one of claims 4, to 7 wherein
a degree of importance of any of the determination result of the age determination means, the information on presence or absence of a successor, and the information on presence or absence of intention to expand that are used for the extraction by the candidate extraction means is changed based on who is the farmer of the liquidated farm in a determination year and beyond.

9. The simulation device for liquidation of farmland according to any one of claims 1 to 8, wherein
the simulation device for liquidation of farmland is configured as a server, and
a user accesses the server from a terminal that is connected thereto via the Internet.

10. A simulation program for liquidation of farmland that functions a computer having a storing section for storing basic information about each farmer including age information, information on presence or absence of a successor, information on presence or absence of intention to expand, and information on a farmed block as a simulation device for liquidation of farmland, wherein the program is implemented in a computer and capable of causing the computer to perform:
acquiring a determination timing;
calculating age of the each farmer in the determination timing based on the age information and determining whether or not the age is same as a specified age or higher;
predicting and storing whether or not the block owned by the each farmer will be a liquidated farm based on a determination result of the age determination, the information on presence or absence of a successor, and the information on presence or absence of intention to expand about the each farmer; and
outputting the block that is predicted as the liquidated farm and the block that is not predicted as the liquidated farm by the liquidated farm prediction in a distinguishable manner from each other.

11. The simulation program for liquidation of farmland according to any one of claims 10,
the simulation device for liquidation of farmland is configured as a server, and a user accesses the server from a terminal that is connected thereto via the Internet.
